Europäisches Patentamt

European Patent Office

Office européen des brevets

(11) Veröffentlichungsnummer: **0 166 149**
**A1**

## (12) EUROPÄISCHE PATENTANMELDUNG

(21) Anmeldenummer: 85105803.2

(22) Anmeldetag: 11.05.85

(51) Int. Cl.⁴: **B 23 K 35/04**
// B23K11/30

(30) Priorität: 22.05.84 CH 2522/84

(43) Veröffentlichungstag der Anmeldung: 02.01.86
Patentblatt 86/1

(84) Benannte Vertragsstaaten: **AT BE CH DE FR GB IT LI LU NL SE**

(71) Anmelder: **Fael S.A., Musinière 17, CH-2072 Saint-Blaise (CH)**

(72) Erfinder: **Schreiber, Peter, Lyss-Strasse 56, CH-2560 Nidau (CH)**
Erfinder: **Monnin, Jacques, Le Banné, CH-2902 Fontenais (CH)**

(74) Vertreter: **Scheidegger, Zwicky, Werner & Co., Stampfenbachstrasse 48 Postfach, CH-8023 Zürich (CH)**

(54) **Elektrodenrolle zum elektrischen Widerstands-Nahtschweissen.**

(57) Um beim elektrischen Widerstands-Nahtschweissen von Eisenblechen mit metallischen Überzügen aus Zinn, Zink, Blei usw. mittels Elektrodenrollen (10) zu verhüten, daß geschmolzenes Überzugsmaterial an den Elektrodenrollen haften bleibt und anlegiert, ist die als Kontaktfläche bestimmte Umfangsfläche jeder Elektrodenrolle (10) mit einer dünnen Schutzschicht (14) aus einem Metall-Nitrid versehen, vorzugsweise aus Titan-Nitrid, Silizium-Nitrid oder Bor-Nitrid. Diese Schutzschicht (14) ist elektrisch leitend, vermag hohen Temperaturen zu widerstehen und ist durch das geschmolzene Überzugsmaterial des Schweißgutes nicht benetzbar. Ferner weist die Schutzschicht eine Härte von mindestens HV 8000 N/mm² auf, während der aus Kupfer oder einer Kupferlegierung bestehende Grundkörper (11) der Elektrodenrolle eine Härte von z.B. HV 3000 bis 6000 N/mm² aufweist.

ACTORUM AG

Elektrodenrolle zum elektrischen Widerstands-Nahtschweissen
_____

Die vorliegende Erfindung betrifft eine Elektrodenrolle zum
elektrischen Widerstands-Nahtschweissen von Eisenblechen
mit metallischen Ueberzügen aus Werkstoffen mit tieferer
Schmelztemperatur, welche Elektrodenrolle einen vorzugsweise aus Kupfer oder einer Kupferlegierung bestehenden
Grundkörper und an ihrer als Kontaktfläche bestimmten Umfangsfläche eine Schutzschicht aus einem Material aufweist,
das durch den geschmolzenen Ueberzugswerkstoff des Schweissgutes nicht benetzbar ist.

Beim elektrischen Widerstandsschweissen von Eisenblechen,
die mit metallischen Ueberzügen aus Zinn, Zink, Blei usw.
versehen sind, schmilzt an den Kontaktstellen der Elektroden der Ueberzugswerkstoff bevor die angestrebte Verschweissung der Eisenbleche erfolgt. Wenn die geschmolzenen Ueberzugswerkstoffe an den Elektroden anlegieren, können bei
nachfolgenden Schweissvorgängen mit den so kontaminierten
Elektroden bekanntlich Schwierigkeiten auftreten, weil dann
die Strom- und die Wärmeleitfähigkeit in nicht voraussehbarer Weise verändert sind. Dies macht sich besonders beim
Nahtschweissen mittels Elektrodenrollen bemerkbar, die an ihren als Kontaktflächen bestimmten Umfangsflächen durch den
Ueberzugswerkstoff des Schweissgutes rasch verschmutzt werden.

Um diesem Nachteil zu begegnen, hat man beim elektrischen
Widerstands-Nahtschweissen mittels Elektrodenrollen schon
seit längerer Zeit jeweils einen Kupferdraht zwischen den einander zugewandten Kontaktflächen der Elektrodenrollen und des Schweissgutes durchlaufen lassen, so dass die geschmolzenen Ueberzugswerkstoffe sich an dem Kupferdraht anlagern und mit diesem fortlaufend wegtransportiert werden, während eine entsprechende frische Partie des Kupferdrahtes an die Schweisstelle gelangt. Diese bekannte Verwendung von Kupferdrähten hat den Nachteil, dass eine verhältnismässig komplizierte Vorrichtung zum Zu- und Abführen der Drähte erforderlich ist und die Drähte selbst erhebliche Kosten verursachen.

Auch ist bekannt, anstelle eines Kupferdrahtes zwischen den einander zugewandten Kontaktflächen der Elektroden und des Schweissgutes einen endlosen Ring umlaufen zu lassen, der aus einem durch den geschmolzenen Ueberzugswerkstoff des Schweissgutes nicht benetzbaren Material besteht, wie z.B. aus Wolfram oder Molybdän oder einer Wolfram-Molybdänlegierung. Auch diese Lösung ist relativ aufwendig und entsprechend teuer und erfordert ein verhältnismässig häufiges Auswechseln des Ringes, da er durch den nötigen hohen Schweissdruck relativ rasch deformiert wird.

Weiter ist für das Widerstandsschweissen beschichteter Stahlbleche bekannt, die Kontaktfläche jeder Elektrode mit einer Schutzschicht aus einem Metall mit sehr hohem Schmelzpunkt zu versehen, z.B. aus Molybdän, Wolfram oder einer Wolframlegierung. Schliesslich ist es für das Widerstandsschweissen von Aluminium auch bekannt, die Kontaktfläche jeder Elektrode mit einer dünnen Schutzschicht aus einem Metall oder einem Metallkarbid, wie Wolfram, Iridium oder Wolframkarbid, zu überziehen, das mit dem zu verschweissenden Gut nicht legiert. Derart beschichtete Elektroden in Form von Rollen für das Nahtschweissen von mit Metallüberzügen versehenen Eisenblechen haben sich bisher in der Praxis nicht durchzusetzen vermocht.

Die Aufgabe der vorliegenden Erfindung ist es, eine an ihrer Kontaktfläche eine Schutzschicht aufweisende Elektrodenrolle der eingangs genannten Art so auszubilden, dass sie für das Widerstands-Nahtschweissen von mit Ueberzügen aus Zinn, Zink, Blei usw. versehenen Eisenblechen besser geeignet ist als bisher bekannte Elektrodenrollen.

Die erfindungsgemässe Elektrodenrolle ist dadurch gekennzeichnet, dass die an ihrer als Kontaktfläche bestimmten Umfangsfläche vorhandene Schutzschicht aus einem Metall-Nitrid besteht. Eine solche Metall-Nitrid-Schicht ist elektrisch leitend und durch den geschmolzenen Ueberzugsstoff der zu verschweissenden Eisenbleche nicht benetzbar; darüber hinaus weist sie eine sehr grosse Härte und damit eine hohe Widerstandsfähigkeit gegen mechanische Abnützung auf.

Vorzugsweise ist das Metall-Nitrid ein Titan- oder Siliziumoder Bor-Nitrid, dessen Härte mindestens HV 8000 N/mm$^2$ beträgt.

Trotz der erwähnten grossen Härte der aus Metall-Nitrid bestehenden Schutzschicht ist ihre mechanische Festigkeit relativ gering, weshalb der Grundkörper der Elektrodenrolle zweckmässig aus einem Material besteht, das sich unter den bei der Schweissung auftretenden Beanspruchungen praktisch nicht deformiert, aber eine gute elektrische und thermische Leitfähigkeit aufweist. Demgemäss besteht der Grundkörper mit Vorteil aus Kupfer oder einer Kupferlegierung mit einer Härte von mindestens HV 3000 N/mm$^2$.

Bei einer bevorzugten Ausführungsform der erfindungsgemässen Elektrodenrolle ist zwischen dem eine Härte von mindestens HV 3000 N/mm$^2$ aufweisenden Grundkörper und der eine Härte von mindestens HV 8000 N/mm$^2$ aufweisenden Metall-Karbid-Schicht eine Zwischenschicht in Form eines Ringes mit einer Härte von HV 6000 bis 8000 N/mm$^2$ angeordnet. Dieser Ring kann z.B. aus gehärtetem Stahl bestehen.

Einzelheiten und Vorteile ergeben sich aus der nun folgenden Beschreibung und den zugehörigen Zeichnungen von Ausführungsbeispielen, die zur Erläuterung der Erfindung dienen.

Fig. 1 zeigt schematisch teils in Ansicht und teils im achsialen Schnitt ein erstes Beispiel der erfindungsgemässen Elektrodenrolle für das elektrische Widerstands-Nahtschweissen;

Fig. 2 veranschaulicht in grösserer Abbildung die Verwendung eines Paares von Elektrodenrollen gemäss Fig. 1 zur Erzeugung einer Quetschschweissnaht;

Fig. 3 ist eine der Fig. 1 analoge Teildarstellung eines zweiten Ausführungsbeispiels der Elektrodenrolle;

Fig. 4 zeigt als drittes Ausführungsbeispiel eine zur Flüssigkeitskühlung ausgebildete Elektrodenrolle gemäss der Erfindung, im achsialen Schnitt.

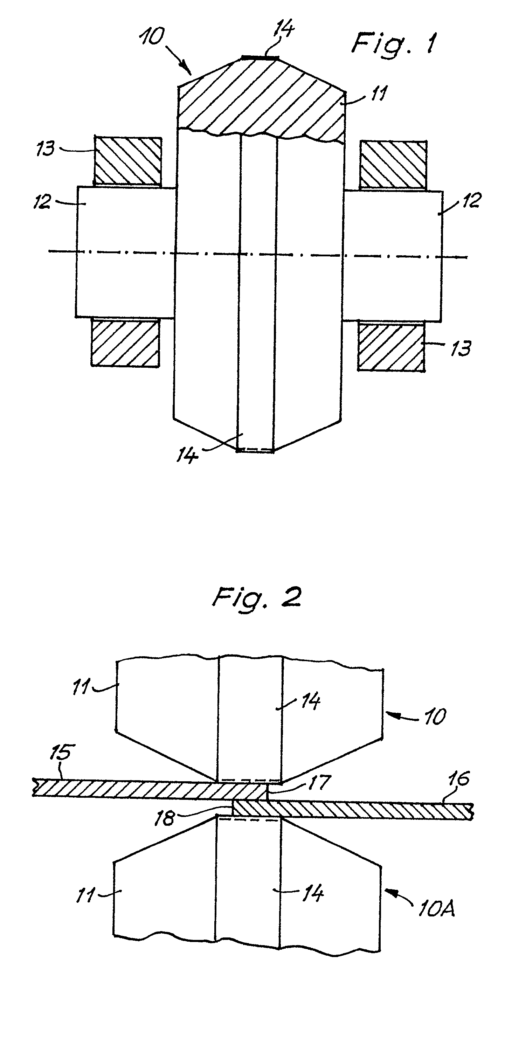

Die in Fig. 1 dargestellte Elektrodenrolle 10 weist einen aus Kupfer oder einer Kupferlegierung bestehenden Grundkörper 11 auf, der mit zwei gleichachsig angeordneten Wellenstummeln 12 versehen ist. Die letzteren sind in lediglich schematisch angedeuteten Lagern 13 drehbar gelagert. Der Grundkörper 11 ist an seinem Umfang im Querschnitt trapezförmig ausgebildet. Es ist aber auch eine konvex bombierte Querschnittsform möglich. Die äusserste Umfangsfläche des Grundkörpers 11 ist mit einer dünnen Schutzschicht 14 belegt, die erfindungsgemäss aus einem Metall-Nitrid besteht, vorzugsweise aus einem Titan-Nitrid, Silizium-Nitrid oder Bor-Nitrid. Die Dicke der Schutzschicht 14 liegt im Bereich von 0,1 bis 100 µm. Diese Metall-Nitrid-Schutzschicht kann unter Anwendung von bekannten chemischen oder physikalischen Verfahren aufgebracht werden und weist eine Härte von mindestens HV 8000 N/mm$^2$ auf, während der Grundkörper 11 zweckmässig eine Härte von mindestens HV 3000 N/mm$^2$ hat.

Elektrodenrollen der beschriebenen Art lassen sich mit Vorteil zum Zusammenschweissen von sich überlappenden Randpartien von Eisenblechen verwenden, die ein- oder beidseitig mit einem Ueberzug aus einem Material mit niedrigerer Schmelztemperatur versehen sind, z.B. aus Zinn, Zink oder Blei. Dabei werden gemäss Fig. 2 die überlappten Randpartien der zu verschweissenden Blechteile 15 und 16 zwischen einer oberen Elektrodenrolle 10 und einer unteren Elektrodenrolle 10A hindurchgeführt, während gleichzeitig die beiden Elektrodenrollen 10 und 10A gegeneinander gedrückt werden und ein elektrischer Strom mit hoher Stromstärke von der einen zur anderen Elektrodenrolle geleitet wird. Die Schutzschicht 14 jeder Elektrodenrolle ist elektrisch leitend und setzt wegen ihrer sehr geringen Dicke dem Stromdurchgang praktisch keinen nennenswerten Widerstand entgegen. Der elektrische Widerstand der miteinander zu verschweissenden Blechteile 15 und 16 ist beträchtlich höher als der Widerstand der beiden Elektrodenrollen 10 und 10A, weshalb die mit den Elektrodenrollen in Berührung stehenden Partien der Blechteile 15 und 16 infolge des Stromdurchganges erhitzt werden und miteinander verschweissen. Dabei schmelzen natürlich die aus Zinn, Zink, Blei usw. bestehenden Ueberzüge der Blechteile 15 und 16. Die Schutzschicht 14 jeder Elektrodenrolle 10 bzw. 10A hat nun die vorteilhafte Eigenschaft, hohen Temperaturen widerstehen zu können und durch das geschmolzene Ueberzugsmaterial der Blechteile 15 und 16 nicht benetzbar zu sein, so dass das geschmolzene Ueberzugsmaterial an der Schutzschicht 14 nicht haften bleibt und mit der Schutzschicht nicht legiert.

Die Elektrodenrolle 10 und 10A werden daher beim Schweissvorgang nicht mit Fremdmaterial beschmutzt, welches in der Folge die Qualität der erzielten Schweissung in hohem Mass beeinträchtigen würde. Deshalb sind die beschriebenen Elektrodenrollen vorzüglich geeignet, während relativ langer Einsatzdauer einwandfreie Schweissnähte von gleichbleibend hoher Qualität zu erzeugen.

In Fig. 2 ist die Erzeugung einer Quetschnaht veranschaulicht, bei welcher die Ueberlappungsbreite der Blechteile 15 und 16 nur wenig grösser als die Dicke der Blechteile ist und die Schnittkanten 17 und 18 der Blechteile 15 und 16 in die Schweissnaht einbezogen werden. Demgemäss liegen die Schnittkanten 17 und 18 der Blechteile innerhalb der Breite der durch die Schutzüberzüge 14 gebildeten Kontaktflächen der Elektrodenrollen 10 und 10A. Durch die bereits erwähnte grosse Härte des Schutzüberzuges 14 jeder Elektrodenrolle ist vermieden, dass sich an der Aussenfläche des Schutzüberzuges 14 im Bereich der Schnittkante 17 bzw. 18 eine Rille bildet unter dem Einfluss des Schweissdruckes und gegebenenfalls der Reibung zwischen dem Schutzüberzug und dem anliegenden Blechteil. Da aber die dünne Schutzschicht 14 aus Metall-Nitrid nur eine geringe mechanische Biege- und Scherfestigkeit aufweist, ist es nötig, den Grundkörper 11 so auszubilden, dass er sich unter den beim Schweissvorgang auftretenden mechanischen Beanspruchungen nicht verformt, und selbst eine ausreichend hohe Härte aufweist.

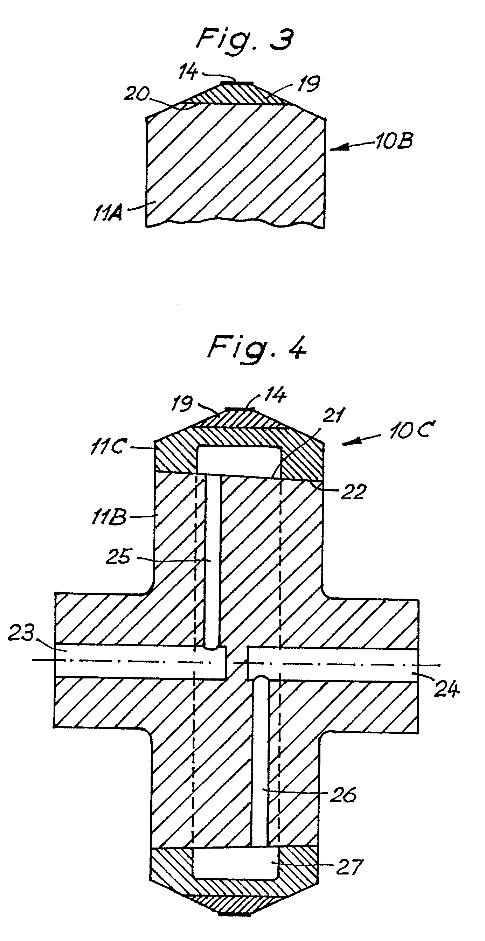

Diese Erkenntnis ist im zweiten Ausführungsbeispiel gemäss Fig. 3 in besonderer Weise berücksichtigt: In diesem Beispiel der Elektrodenrolle 10B ist der aus Kupfer oder einer Kupferlegierung bestehende Grundkörper 11A an seinem Umfang von einem Ring 19 umgeben, der seinerseits an seiner äussersten Umfangsfläche die aus einem Metall-Nitrid bestehende Schutzschicht 14 trägt. Der Ring 19 besteht aus
einem Werkstoff, dessen Härte zwischen derjenigen des
Grundkörpers 11A und der Schutzschicht 14 liegt. Der Ring
19 kann z.B. aus gehärtetem Stahl mit einer Härte von
HV 6000 bis 8000 N/mm$^2$ bestehen. Ein solcher Ring 19 weist
allerdings eine geringere elektrische und thermische Leitfähigkeit als der Grundkörper 11A auf. Dieser Nachteil
lässt sich aber in tragbaren Grenzen halten, indem die radiale Abmessung des Ringes 19 verhältnismässig klein und
die Kontaktflächen 20 zwischen dem Ring 19 und dem Grundkörper 11A relativ gross bemessen werden. Im übrigen wird
die Form des Ringes 19 zweckmässig derart gewählt, dass
die beim Schweissvorgang auftretenden Drücke sich möglichst
gleichmässig auf die Kontaktflächen 20 verteilen.

Das in Fig. 4 dargestellte dritte Ausführungsbeispiel der
erfindungsgemässen Elektrodenrolle ist zur Flüssigkeitskühlung eingerichtet. Der aus Kupfer oder einer Kupferlegierung bestehende Grundkörper dieser Elektrodenrolle 10C
ist zweiteilig ausgebildet und besteht aus einem die Wellenstummel 12 aufweisenden Innenteil 11B und einem ringförmigen Aussenteil 11C. Mit Vorteil ist der Aussenteil 11C
demontierbar und auswechselbar. Der Innenteil 11B weist
eine konische Umfangsfläche 21 und der Aussenteil 11C eine
entsprechende konische Innenfläche 22 auf, damit ein guter
mechanischer Sitz des Aussenteils 11C auf dem Innenteil
11B und ein guter elektrischer Kontakt zwischen diesen
beiden Teilen gewährleistet sind. Es ist aber jede andere
Befestigungsart möglich, die ebenso gute mechanische und
elektrische Eigenschaften ergibt. Der Innenteil 11B des
Grundkörpers weist achsiale Bohrungen 23 und 24 sowie zwei
oder mehr radiale Bohrungen 25 und 26 auf, die mit den
achsialen Bohrungen kommunizieren. Der ringförmige Aussenteil 11C des Grundkörpers ist mit einer breiten umlaufenden Innennut 27 versehen, in welche die radialen Bohrungen 25 und 26 einmünden. Die Bohrungen 23 bis 26 und die Nut 27 bilden zusammen Durchflusswege für eine Kühlflüssigkeit die auch während der Drehung der Elektrodenrolle 10C kontinuierlich strömen kann. Aehnlich wie bei dem zweiten Ausführungsbeispiel gemäss Fig. 3 ist die aus Metall-Nitrid bestehende Schutzschicht 14 an der äussersten Umfangsfläche eines Ringes 19 angebracht, dessen Härte zwischen derjenigen der Schutzschicht 14 und des Grundkörpers 11B, 11C liegt. Der Ring 19 sitzt auf dem Aussenteil 11C des Grundkörpers und hat die gleichen Eigenschaften wie der entsprechende Ring 19 des Ausführungsbeispiels gemäss Fig. 2.

Die mit Bezug auf Fig. 4 beschriebene Elektrodenrolle 10C bietet den Vorteil, dass sie mittels einer strömenden Kühlflüssigkeit mühelos auf verhältnismässig niedrigen Temperaturen gehalten werden kann, welche die Erzielung einer sauberen Schweissnaht erlauben. So ist es z.B. möglich, die Oberflächentemperatur der Elektrodenrolle 10C unter 300°C zu halten. Weiter ist zu bemerken, dass die konstruktive Ausgestaltung gemäss Fig. 4 besonders für Elektrodenrollen mit einem relativ grossen Aussendurchmesser geeignet ist und den Vorteil bietet, dass der Aussenteil 11C auswechselbar ist, z.B. zwecks Anpassung an unterschiedliche zu verschweissende Werkstücke oder zum Zwecke des Ersatzes bei Beschädigung oder Abnützung.

Bei einer nicht dargestellten Variante des Ausführungsbeispiels gemäss Fig. 4 ist der relativ harte Zwischenring 19 zwischen der Schutzschicht 14 und dem Aussenteil 11C des Grundkörpers weggelassen und die Schutzschicht 14 unmittelbar auf dem entsprechend geformten Aussenteil 11C des Grundkörpers angebracht. In diesem Fall ist es möglich und vorteilhaft, den Aussenteil 11C aus einer Kupferlegierung mit grösserer Härte als diejenige des Innenteils 11B des Grundkörpers herzustellen, ohne dabei einen nennenswert höheren elektrischen Durchgangswiderstand für den Schweissstrom in Kauf nehmen zu müssen.

Allen beschriebenen Ausführungsbeispielen der erfindungsgemässen Elektrodenrolle gemeinsam ist der Vorteil, dass die aus einem Metall-Nitrid bestehende Schutzschicht 14 ein Anhaften von geschmolzenem Ueberzugswerkstoff der zu verschweissenden Bleche wirksam verhindert und überdies eine hohe Resistenz gegen mechanische Abnützung aufweist.

Bei einer Ausführungsvariante zum Beispiel gemäss den Fig. 1 und 2 kann der Grundkörper 11 anstatt aus Kupfer oder einer Kupferlegierung ganz oder teilweise aus Stahl oder einem anderen Material bestehen.

P a t e n t a n s p r ü c h e

1. Elektrodenrolle zum elektrischen Widerstands-Nahtschweissen von Eisenblechen mit metallischen Ueberzügen
   aus Werkstoffen mit tieferer Schmelztemperatur, welche
   Elektrodenrolle einen Grundkörper und an ihrer als Kontaktfläche bestimmten Umfangsfläche eine Schutzschicht
   aus einem Material aufweist, das durch den geschmolzenen
   Ueberzugswerkstoff des Schweissgutes nicht benetzbar ist,
   dadurch gekennzeichnet, dass die Schutzschicht (14) aus
   einem Metall-Nitrid besteht.

2. Elektrodenrolle nach Anspruch 1, dadurch gekennzeichnet,
   dass das Metall-Nitrid Titan-Nitrid ist.

3. Elektrodenrolle nach Anspruch 1, dadurch gekennzeichnet,
   dass das Metall-Nitrid Silizium-Nitrid ist.

4. Elektrodenrolle nach Anspruch 1, dadurch gekennzeichnet,
   dass das Metall-Nitrid Bor-Nitrid ist.

5. Elektrodenrolle nach einem der Ansprüche 1 bis 4, dadurch
   gekennzeichnet, dass die Schutzschicht (14) eine Härte von
   mindestens HV 8000 N/mm$^2$ und der Grundkörper (11; 11A, 11B
   + 11C) eine Härte von mindestens 3000 N/mm$^2$ aufweisen.

6. Elektrodenrolle nach Anspruch 5, dadurch gekennzeichnet,
   dass zwischen dem Grundkörper (11A; 11B + 11C) und der
   Schutzschicht (14) ein Ring (19) mit einer Härte von mindestens HV 6000 N/mm$^2$ angeordnet ist.

7. Elektrodenrolle nach einem der Ansprüche 1 bis 6, dadurch
   gekennzeichnet, dass die Schutzschicht (14) eine Stärke
   zwischen 0,1 und 100 μm aufweist.

0166149

Fig. 1

Fig. 2

*Fig. 3*

*Fig. 4*

Europäisches
Patentamt

**EUROPÄISCHER RECHERCHENBERICHT**

0166149
Nummer der Anmeldung

EP 85 10 5803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 7, Nr. 261 (M-257) [1406], 19 November 1983; & JP - A - 58 141 877 (SUMITOMO DENKI KOGYO K.K.) 23-08-1983 | 1,2,5, 7 | B 23 K 35/04 // <br> B 23 K 11/30 |
| | --- | | |
| A | CA-A-1 125 866 (D. VENNE u.a.) * Ansprüche 1-4,7; Figur 3; Seite 4, Zeilen 25 - Seite 6, Zeilen 2 * | 1-5,7 | |
| | --- | | |
| A | WELDING AND METAL FABRICATION, Band 38, Nr. 2, März 1980, Seiten 97-103, Haywards Heath, IPC Business Press Ltd.; P.S. OLDROYD et al.: "Overcoming the inherent problems of coated steels" | | |
| | ----- | | RECHERCHIERTE SACHGEBIETE (Int. Cl.4) <br><br> B 23 K |

Der vorliegende Recherchenbericht wurde für alle Patentansprüche erstellt.

| Recherchenort <br> DEN HAAG | Abschlußdatum der Recherche <br> 27-08-1985 | Prüfer <br> MOLLET G.H.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82